# EUROPEAN PATENT SPECIFICATION

(11) **EP 3 907 100 B1**
(45) Date of publication and mention of the grant of the patent: **31.01.2024**
(21) Application number: 21172594.0
(22) Date of filing: 06.05.2021
(51) Int. Cl.: B60L 53/35, B23Q 1/48

(54) **MANIPULATOR FOR HANDSFREE CHARGING ELECTRIC VEHICLES**
MANIPULATOR ZUM FREIHÄNDIGEN LADEN VON ELEKTROFAHRZEUGEN
MANIPULATEUR POUR CHARGER DES VÉHICULES ÉLECTRIQUES EN MAINS LIBRES

(30) Priority: 08.05.2020 NL 2025529; 27.10.2020 EP 20204159
(43) Date of publication of application: 10.11.2021
(73) Proprietor: Prodrive Technologies Innovation Services B.V., 5692 EM Son en Breugel (NL)
(72) Inventor: VAN BEMMEL, Ronald Johannes Cornelis, 5692 EM Son en Breugel (NL); MEESSEN, Koen Joseph, 5692 EM Son en Breugel (NL)
(74) Representative: IP Maison

(56) References cited:
- EP-A1- 1 637 277
- EP-A2- 0 788 212
- WO-A1-02/34480
- WO-A1-02/096605
- CN-A- 102 218 596
- DE-A1- 10 019 162
- DE-A1-102018 116 718

## Description

### Technical field

The present invention generally relates to a manipulator for charging electric vehicles automatically, specifically for aligning energy transfer units and more specifically for mating a plug and a socket. The invention further relates to a charging station comprising such a manipulator.

### Background art

Connection devices for charging electric vehicles automatically are known in the art. US20160332525 A1 discloses a connection device for conductive charging providing lifting means to move a charging head towards an underbody of a vehicle. Upon striking the underbody, continued actuation of the lifting means in combination with geometrical features provided on the charging head achieves lateral alignment. The disadvantage of such a connection device is that it allows a limited lateral offset and therefore requires very accurate positioning of the vehicle. Furthermore, lifting the charging head with such a connection device will cause the charging head to tilt, which causes a misalignment of the electrical contacts of the charging head and the electrical contacts of the vehicle.

EP0788212A2 discloses a more complex connection system for inductive charging allowing more positioning freedom for the vehicle through the use of stacked linear actuators. The system comprises orthogonally placed linear actuators for moving a body comprising a charging coil in the horizontal plane, wherein the body further comprises a pantograph mechanism for moving the charging coil in the vertical direction. The disadvantage of such a connection system is that stacked actuators limit the precision, moveable actuators require a movable power connection, it requires a large number of moving elements and is difficult to shield.

WO2019060939 discloses an alternative solution for actively moving a plug in a volume through the use of a number of stacked rotary and linear actuators. The system comprises a rotatable platform provided with a set of stacked linear actuators. The disadvantage of such a manipulator is that stacked actuators limit the precision, require a movable power connection for the actuators and make shielding against pollution such as moisture or debris difficult in general and specifically of the powered components.

From EP1637277, CN102218596, DE10019162 and WO02096605 manipulators, suitable for use in "handsfree" charging of electric vehicles, are known comprising linkage assemblies with multiple prismatic joints.

### Summary of the invention

It is an object of the invention to provide a manipulator that solves the disadvantages of the prior art e.g. uses a limited number of moving elements, can achieve a higher precision, has a static power connection for the actuators, can easily be shielded against pollution, allows a high degree of freedom for positioning a socket on a vehicle and the vehicle itself and maintains the orientation (e.g. horizontal) of the energy transfer device. Embodiments according to the invention preferably solve one or even more preferably all of the disadvantages associated with solutions according to the prior art.

According to the invention the object is achieved by providing a manipulator according to the appended claims. Such a manipulator achieves the object of the invention because it requires only three link assemblies pivotally connected to the manipulator stage on one end and pivotally connected to three prismatic joints for actuating the link assemblies on another end to position the manipulator stage in various locations of an xyz-volume through triangulation, while ensuring that the manipulator stage does not tilt in any direction. In addition, the prismatic joints are configured to move first ends of the link assemblies along trajectories which are substantially aligned. This facilitates positioning the prismatic joint or parts (e.g. actuated or electro-mechanical) thereof at a single side of the manipulator, which simplifies shielding sensitive components, such as electrically powered components.

In a preferred embodiment, the first, the second and the third trajectory are arranged such that in a projection of these trajectories on the first plane the projection of the second trajectory defines an axis and the projections of the first and the third trajectory are arranged at opposing sides of the axis defined by a projection of the second trajectory on the first plane. Advantageously, the first ends of the first and third link assemblies are arranged at a same side of the manipulator stage (e.g. in a retracted state of the manipulator), wherein the same side is determined based on a projection of the first ends of the first and third link assemblies and the stage on the first plane. Additionally, the first end of the second link assembly may be arranged at the same side, wherein the same side is determined based on a projection of the first ends of the first, the second and third link assemblies and the stage on the first plane.

The first and the third trajectories may be arranged such that in a projection of the first and the third trajectories on the first plane, the first and the third trajectory are arranged next to one another, for instance such that the first trajectory and the third trajectory substantially overlap along the axis defined by a projection of the second trajectory on the first plane. Additionally, the second trajectory may be configured such that in a projection on the first plane further comprising the second trajectory, the projections of the first and the third trajectory substantially overlap at least in part the projection of the second trajectory along the axis defined by a projection of the second trajectory.

In general, embodiments of the invention may comprise different kinds of link assemblies, which may be used in combination, for achieving the object of the invention. A first species of link assemblies is limited to a single (i.e. a first) link. A second species of link assemblies comprises two (i.e. a first and a second) links forming opposing sides of a parallelogram or having a same length and being arranged in parallel. Embodiments may comprise link assemblies of only the first species, only the second species or combinations of the first and the second species.

Link assemblies according to the first species may limit or prevent rotational degrees of freedom of the manipulator stage by limiting or preventing rotation of the first link about its longitudinal axis. This may be achieved by arranging that the joints of the link assembly allow just two rotational degrees of freedom, for instance using two stacked revolute joints. An example of such a manipulator comprises a first, a second and a third link assembly each limited to a single link, wherein one of the first joint and a second joint of each link assembly is configured for allowing just two rotational degrees of freedom. Preferably, each one of the first and second joint of each link assembly is configured for allowing just two rotational degrees of freedom.

Link assemblies according to the second species may limit or prevent rotational degrees of freedom of the manipulator stage by limiting or preventing rotation of the link assembly about a normal (an axis) of a plane defined by the parallelogram. This may be achieved by arranging the first endpoints of the link assembly at a constant relative location (e.g. distance and orientation) to one another, for instance by connecting the first endpoints at fixed locations of the corresponding prismatic joint, configured for moving the first endpoints along a linear trajectory. An example of such a manipulator comprises a first, a second and a third link assembly each comprising a second link, wherein each first joint of the link assembly is connected to the corresponding prismatic joint, configured for moving the first endpoints along a linear trajectory.

The number of rotational degrees of freedom of the manipulator stage relates to the orientation of the axes (of any species) combined. In configurations wherein the axes of the link assemblies are configured in parallel, one rotational degree of freedom of the manipulator stage may be limited. In configurations wherein the axes of the link assemblies are coplanar and at least one axis is skew with respect to the other axes, two rotational degrees of freedom of the manipulator stage may be limited. In configurations wherein at most two axes of the link assemblies are co-planar, wherein the at most two of the axes are non-parallel, three rotational degrees of freedom of the manipulator stage may be limited.

In a variant outside the scope of the appended claims, the first endpoints of the first, the second and the third link assemblies are configured for moving independently from one another. Such a variant outside the claimed invention of a manipulator may comprise a support, wherein one end of each of the first, the second and third prismatic joint is individually connected to the support and is configured for moving another end of the respective prismatic joint pivotally connected to the corresponding first endpoint independently from one another. Such a configuration may improve the positioning precision, because the tolerances of each prismatic joint are not stacked on top of one another. Furthermore, shielding sensitive components may be simpler in embodiments wherein each of the prismatic joints are at least in part stationary (e.g. at the one end). For instance, the prismatic joints each comprise a belt driven actuator, comprising a rotary motor and a belt, wherein the rotary motor is configured for driving a belt. In such a varian the motor may be stationary (e.g. fixedly connected to the support) and the first ends may be connected to the corresponding belts.

According to the invention, the prismatic joints are stacked and thus do not all move independently. In a preferred embodiment of such alternative, the second prismatic joint is individually connected to the support and the first and the third prismatic joint are connected to the support via the second prismatic joint. For instance, the first and the third prismatic joint are arranged on a platform, wherein the platform is arranged to be moved relative to the support by the second prismatic joint.

One of the benefits of such an embodiment is its so-called backdrivability, wherein movement of the manipulator stage is induced by an external force that is applied (e.g. by the socket for instance provided on a vehicle) to the manipulator stage. Such movement in a direction substantially parallel to the second trajectory is only affected by the friction provided by the second prismatic joint, and such movement within a plane substantially orthogonal to the second trajectory is only affected by the friction provided by the first and the third trajectory. Advantageously, the first, the second and the third prismatic joints each comprise a motor, wherein the motors are preferably all arranged on the platform.

Advantageously, the manipulator comprises a second prismatic joint comprising a telescopic linear guide having a stroke essentially parallel to the second trajectory, wherein the telescopic linear guide is configured for movably connecting the platform to the support. Such a telescopic linear guide supports the platform, for instance even when the platform is located in extension of the first cover without requiring permanent guides, belts or tracks extending onto the environment.

Preferably, the telescopic linear guide comprises a first linear bearing (e.g. a slide bearing) configured for being connected to the support, a first rod-like member connected to the first linear bearing, wherein the first rod-like member is configured for sliding along the first linear bearing, a second rod-like member fixedly connected to the first rod-like member and arranged in parallel to the first rod-like member, a second linear bearing (e.g. slide bearing) suitable for being connected to the platform, wherein the second linear bearing is connected to the second rod like member and configured for sliding along the second rod like member. Such a telescopic linear guide has the benefit that it is simpler, less expensive and more robust than known telescopic linear guides. Furthermore, linear slide bearings (e.g. bushings), preferably comprising a sliding surface (completely) enclosing the corresponding rod-like member, preferably being free from rolling elements, are less sensitive to dirt and in case dirt is deposited, the sliding action of the rod-like members along the linear slide bearing provides for cleansing action.

In a preferred embodiment, the manipulator comprises a first cover, configured for housing the link assemblies in a retracted state of the manipulator. Preferably, such first cover is further configured for allowing the link assemblies to extend from a side of the first cover in extension of the second trajectory when the manipulator is in an extended state, wherein the stage may be moved away from the support by the first or third link assembly. The side of the first cover may for instance comprise a panel pivotally connected to the first cover, which panel may be configured to move (e.g. rotate) relative to the first cover by moving the first endpoint of the second link assembly along the second trajectory. Such panel may further be configured for moving (e.g. translate) away from the first cover by moving the first endpoint of the first of third link assembly, for allowing the stage to be moved away from the support when the link assemblies are not fully extended beyond the side of the first cover (e.g. the first endpoints are not all located outside the first cover).

Preferably, the prismatic joints comprise a rack and pinion assembly for inducing a relative movement between parts of the prismatic joints. The benefit of such rack and pinion assemblies are that they are easy to assemble and allow assembly automation. Furthermore, they are ideally suitable for embodiments wherein the prismatic joints are stacked. For instance, in an embodiment comprising a platform, the active components (e.g. the motor driving the pinion) of all prismatic joints can be attached to the platform. The rack of the second prismatic joint may be fixedly connected to the support. The rack of the first and third prismatic joint may be arranged to move with respect to the platform in a direction essentially parallel to the corresponding trajectory. Further, the racks of the first and third prismatic joint may be connected to the corresponding first endpoints and configured to move such first endpoints with respect to the platform. For instance, the racks of the first and third prismatic joint are fixedly connected to the corresponding first endpoints (e.g. directly or via a connecting member).

In a preferred embodiment at least one and preferably each one of the first, the second and the third link assemblies comprises a second link, comprising a first endpoint comprising a first joint configured for pivotally connecting the at least one link to the first, the second and the third prismatic joint, respectively, and a second endpoint comprising a second joint configured for pivotally connecting the at least one link to the manipulator stage and wherein each of the link assemblies comprising a second link define a parallelogram. Such an embodiment provides an alternative means for limiting the rotational degrees of freedom of the manipulator stage. These embodiments also allow the use of first and/or second joints with three degrees of freedom that are unconstrained.

In a preferred embodiment, any one of the first, the second and the third link assemblies comprising the second link defines a second plane, which second plane comprises an axis perpendicular to the second plane, wherein any other one of the first, the second and the third link assemblies comprise an axis parallel to a longitudinal axis of the first link, and wherein the axis of each link assembly are skew to one another and configured to span a three-dimensional space (Cartesian Coordinate System). Such an embodiment has well defined states of the first, second and third prismatic joints for positioning the manipulator stage.

Each link assembly may comprise multiple, preferably two, links forming a parallelogram or a single link. Every combination of link assemblies is allowed, as long as the combination of blocked rotations spans a three-dimensional space. The blocked rotation of a link assembly limited to a single link is its own longitudinal axis and the blocked rotation of a link assembly forming a parallelogram is about its normal. The degrees of freedom (DOF) mentioned in this respect for the present invention therefore relate to rotational degrees of freedom. The first and second joints of link assemblies limited to a single link preferably only allow two rotational degrees of freedom, for instance such joints are universal joints. Link assemblies forming a parallelogram can have multiple joint configurations, because a link assembly may comprise a different combination of first and second joints:

| **Joint configurations** | First joint with 2 free DOFs | First joint with 3 free DOFs |
|---|---|---|
| Second joint with 2 free DOFs | Overconstrained*** | Statically determinate* |
| Second joint with 3 free DOFs | Statically determinate* | Underconstrained** |

| | | |
|---|---|---|
| * Preferred ** May introduce internal vibrations, but the mechanism can still function. *** May introduce internal stresses and friction when the joints are not perfectly aligned | | |

This results in a total of 16 possible configurations for each of the link assemblies that form a parallelogram.

Advantageously, each first endpoint of the second link assembly is arranged equidistant from the first plane. This enables configuring a symmetrical arrangement of the link assemblies. Preferably, the first endpoints of the second links of the first and third link assemblies are arranged equidistant from the first plane. Optionally, the first endpoint of the first and second link of the first link assembly are not equidistant from the first plane and the first endpoints of the first and second link of the third link assembly are not equidistant from the first plane. This has the benefit that it may be configured such that there is no configuration or state wherein the parallelograms are arranged in parallel planes and thus positioning of the manipulator stage is always possible and well defined. Alternatively, each first endpoint of the first link assembly is arranged equidistant from the first plane and each first endpoint of the second link assembly is arranged equidistant from the first plane and each first endpoint of the third link assembly is arranged equidistant from the first plane. This has the benefit of providing a compact manipulator. Optionally, the manipulator comprises additional means (e.g. ramp) for displacing the manipulator stage, for instance for configurations or states wherein at least two of the parallelograms are arranged in parallel planes.

Preferably, a first distance between a first endpoint and a second endpoint of the first link of the first link assembly is substantially equal to a second distance between a first endpoint and a second endpoint of the first link of the third link assembly. This enables configuration or state wherein the first and third link assemblies are symmetrically arranged.

The manipulator stage preferably comprises a plurality of connecting means arranged for connecting the second joint, wherein each connecting means of the plurality of connecting means individually connects one of the second joints. Such an arrangement may prevent the crossing or collision of links when operating the manipulator. Advantageously, the connecting means of the plurality of connecting means are spaced apart along a direction having a directional component parallel to the first plane and orthogonal to the second trajectory.

In an advantageous embodiment at least two and preferably each of the first, the second and the third link assemblies are configured for limiting and optionally preventing a rotation of at least two first links about their longitudinal axis defined by the corresponding first and second endpoint. Prevention of rotation of a first link is beneficial in situations where a link assembly is limited to a single link, because it is a relatively simple measure by which the rotation of the manipulator stage can be constrained. Embodiments where each link assembly is limited to a single link of which rotation about its longitudinal axis is prevented, may be configured to achieve a manipulator stage wherein rotation of the manipulator stage in all directions may be prevented. Alternatively, in embodiments wherein the link assemblies comprise a second link, for instance arranged in parallel with the first link, it may be beneficial to limit the rotation to an extent that allows some tolerance for alignment deviations of the link assemblies.

Preventing rotation of a link about its longitudinal axis can for example be achieved in embodiments, wherein at least one and preferably each one of the first, the second and the third link assemblies comprise a first joint allowing just two rotational degrees of freedom and optionally a second joint allowing just two rotational degrees of freedom. For instance, the first joint and optionally the second joint each comprise two stacked revolute joints.

Limiting rotation of a link about its longitudinal axis may for instance be achieved using a ball joint, such as a rod end bearing. In such embodiments the first joint and optionally the second joint of any one of the first, the second and the third link assemblies comprising the second link may comprise a ball joint, such as a rod end bearing. For instance, the casing of the rod end bearing is connected to the respective link endpoint and the ball swivel, encapsulated in the casing is connected to the manipulator stage.

Advantageously, the first endpoint of the second link assembly is arranged away from the first plane, wherein the first plane is defined by the first and the third trajectory. Additionally or alternatively, the second trajectory has with the first plane one of a list of: an acute angle of between 0 and 30 degrees, preferably between 5 and 10 degrees. Such measures may facilitate moving (e.g. lifting) the manipulator stage away from the first plane in all states (e.g. in the retracted or idle state) of the manipulator.

In a compact embodiment of a manipulator according to the invention, the first plane may be arranged substantially parallel to a horizontal plane. Additionally or alternatively, at least one of the first, the second and the third trajectory is substantially linear, more preferably each of the first, the second and the third trajectory is substantially linear. This may allow accurate positioning of the manipulator stage in the entire working range.

In an advantageous embodiment of a manipulator according to the invention, the second trajectory is arranged between a linear extrapolation of the first trajectory and a linear extrapolation of the third trajectory. Preferably, the second trajectory is arranged substantially equidistant from the linear extrapolation of the first trajectory and the linear extrapolation of the third trajectory. Such an arrangement of the trajectories aids in accurate positioning of the manipulator stage in the entire working range.

Moving the manipulator stage away from the first plane may be supported by providing a manipulator comprising a stationary push member configured to engage the second link assembly or the manipulator stage, such that upon actuation of the second link assembly by the second prismatic joint, the manipulator stage moves away from the first plane. Supporting such movement of the manipulator stage away from the first plane is certainly advantageous in embodiments wherein configurations or states of the manipulator allow links to be arranged substantially co-planar. Preferably, the stationary push member is arranged at the second endpoint of the second link assembly. In a simple embodiment, the stationary push member comprises a ramp, comprising an inclined surface in extension of the second trajectory (e.g. between the first and second endpoint in a parked state of the manipulator).

Multiple types of prismatic joints are suitable, for example the prismatic joint may comprise a guide comprising a slide for pivotally connecting the corresponding first endpoint. Preferably, each guide is individually connected to the support to allow independent movement of the first ends of the links.

A manipulator according to the invention advantageously comprises a housing for housing electronic components. Such housing may shield manipulator components such as the electronic components from external influences such as moisture and debris. Preferably, the housing is located on one side of the manipulator in extension of each of the trajectories.

Additionally or alternatively, the manipulator comprises a first cover arranged for covering at least a part of the first and the third link assemblies up to the manipulator stage, wherein the first cover is arranged for sliding away from the manipulator stage in a direction corresponding to a directional component of the first and third trajectory. This provides a relatively simple means for removably shielding the substantially aligned first and third trajectory. For embodiments wherein the first, second and third trajectory substantially overlap, the first cover may be arranged for covering at least a part of the first, the second and the third link assemblies up to the manipulator stage, wherein the first cover is arranged for sliding away from the manipulator stage in a direction corresponding to a directional component of the first and third trajectory.

Advantageously, the first cover may comprise elongated ribs for supporting the cover, which elongated ribs are arranged laterally of at least part of the first and third trajectory in a state covering the first and third trajectory, and extend along a direction having a directional component corresponding with a directional component of the first and third trajectory. This may reduce costs of a cover with certain structural integrity requirements. Furthermore, it may provide a relatively simple means for maintaining the structural integrity in situations where a wheel of a vehicle impacts the manipulator cover for instance during a parking manoeuvre.

Typically, a manipulator according to the invention further comprises an energy transfer unit connected to the manipulator stage. Preferably, the energy transfer unit is pivotally connected (e.g. using a hinging member such as a ball joint) to the manipulator stage to allow for some misalignment between the energy transfer unit connected to the manipulator and the energy transfer unit connected to the vehicle.

In a preferred embodiment, the second link assembly is limited to a first link, for instance wherein the first link of the second link assembly is configured for providing a conduit for guiding a power cable towards the stage, such that power can be provided to the energy transfer unit and is shielded from the environment. Advantageously, the first and the third link assembly comprise a second link. A conduit suitable for guiding a power cable may have multiple shapes or sizes. In a preferred embodiment the conduit is arranged to have an elongated cross section (e.g. rectangular, oval) perpendicular to a direction of the conduit. Such an elongated cross section requires the least building height of the manipulator and facilitates guiding a power cable being substantially flat, for instance comprising conductors arranged in an elongate (e.g. linear) array.

In the present specification, link assemblies limited to a first link should be construed as link assemblies comprising a single link (i.e. a first link) and thus being free from a second link.

### Brief description of the figures

Fig. 1 shows several views of a schematic representation of a manipulator outside the scope of the claimed invention in an elevated state.
Fig. 2 shows several views of a schematic representation of a manipulator outside the scope of the claimed invention in an elevated state.
Fig. 3 shows several views of a schematic representation of a manipulator outside the scope of the claimed invention in an elevated state..
Fig. 4 shows a top view of trajectories for a manipulator outside the scope of the claimed invention.
Figs. 5A-B show several views of a manipulator outside the scope of the claimed invention in a parked state.
Figs. 6A-B show several views of the manipulator according to Figs. 5A-B in an elevated state.
Fig. 7 shows a perspective view of the manipulator according to Figs. 5A-B and 6A-B comprising a cover.
Fig. 8 shows a perspective view of a schematic representation of a manipulator according to the present invention.
Figs. 9A-D show top and side views of a schematic representation of a platform provided on a telescopic linear guide according to the present invention.
Figs. 10A-C show perspective views of a manipulator according to the present invention in various states.
Fig. 11 shows a perspective view of a manipulator according to the present invention in a retracted state.

### Detailed description of embodiments

The invention will be further explained according to the figures, wherein the same numerals refer to the same features.

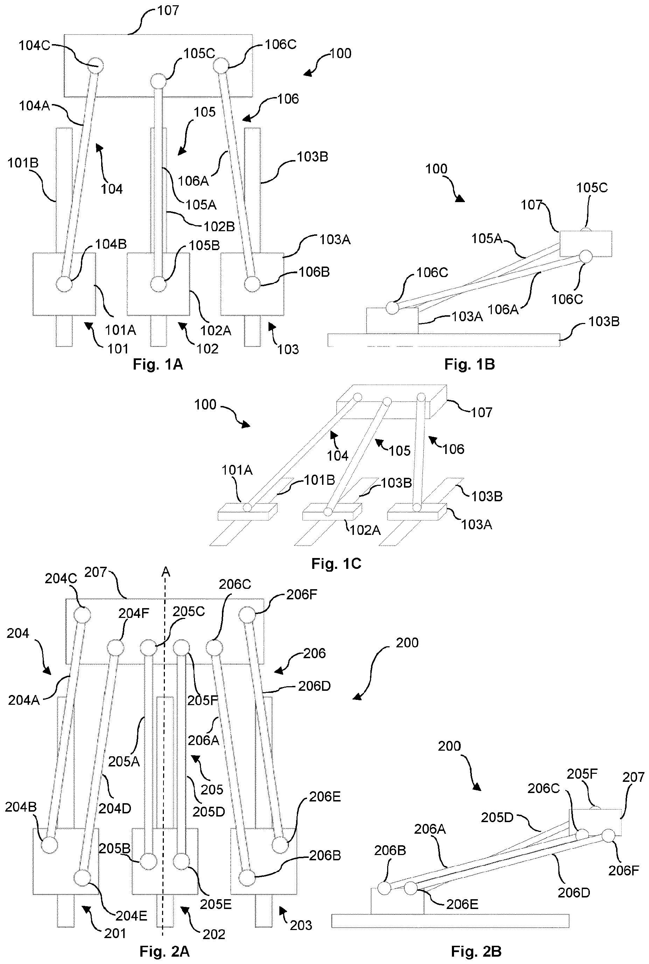

Referring to Fig. 1, the manipulator 100 is configured for positioning the manipulator stage 107 such that for instance an energy transfer unit (e.g. a plug, not shown) connected to the manipulator stage 107 can be mated to another energy transfer unit (e.g. a socket on a vehicle, not shown). The manipulator 100 preferably provides three translational degrees of freedom to the manipulator stage 107 for positioning the energy transfer unit in an xyz-volume using three prismatic joints 101, 102, 103 for actuation.

The prismatic joints comprise a mobile part 101A, 102A, 103A that is connected to the manipulator stage 107 through link assemblies 104, 105, 106. The prismatic joints 101, 102, 103 may further comprise a stationary part 101B, 102B, 103B, such as a guide connected to a support (not shown) for guiding the mobile part 101A, 102A, 103A along a trajectory, for instance formed by the stationary part 101B, 102B, 103B. Preferably, such trajectories are linear and arranged substantially in parallel.

The link assemblies 104, 105, 106 comprise a first link 104A, 105A, 106A with a first and a second endpoint. The first endpoint comprises a first joint 104B, 105B, 106B for pivotally connecting the first endpoint of the first link 104A, 105A, 106A to the mobile part 101A, 102A, 103A of one of the prismatic joints 101, 102, 103 and the second endpoint comprises a second joint 104C, 105C, 106C for pivotally connecting the second endpoint of the first link 104A, 105A, 106A to the manipulator stage 107. Preferably, the link assemblies 104, 105, 106 are configured for limiting or preventing the rotation of the respective first link 104A, 105A, 106A about its longitudinal axis, for instance using suitable first joints 104B, 105B, 106B and second joints 104C, 105C, 106C (e.g. stacked revolute joints), and arranged such that the longitudinal axis of each first link 104A, 105A, 106A has a different orientation and at most two of these longitudinal axes are co-planar. Preferably, the manipulator 100 is configured such that for all operating positions of the manipulator stage 107 this condition is met.

For instance, in a parked state, wherein the manipulator stage 107 is positioned nearest to the stationary part 102B and the centre link 105A is co-planar with the stationary part 102B, the outer links 104A, 106A are configured co-planar, having substantially a same angle with respect to the horizontal plane, but have a different orientation with respect to one another, and the centre link 105A has a different angle with respect to the horizontal plane than the outer links 104A, 106A.

The manipulator stage 100 is connected to the second joints 104C, 105C, 106C of the link assemblies 104, 105, 106. Preferably, the second joints 104C, 105C, 106C of the link assemblies 104, 105, 106 are connected to the manipulator stage 107 adjacent to one another, such that a sequence of second joints 104C, 105C, 106C corresponds to a sequence of first endpoints 104B, 105B, 106B along a direction perpendicular to one of the stationary parts 101B, 102B, 103B of the prismatic joints 101, 102, 103.

Referring to Fig. 2, each of the link assemblies 204, 205, 206 of a manipulator 200, 500, 600, 700 may also comprise a second link 204D, 205D, 206D for connecting the corresponding prismatic joint 201, 202, 203 to the manipulator stage 207. In such case the second link 204D, 205D, 206D also comprises a first and a second endpoint. The first endpoint comprises a first joint 204E, 205E, 206E for pivotally connecting the first endpoint of the second link 204D, 205D, 206D to the mobile part of one of the prismatic joints 201, 202, 203 and the second endpoint comprises a second joint 204F, 205F, 206F for pivotally connecting the second endpoint of the second link 204D, 205D, 206D to the manipulator stage 207. For such variants each first and second joint 204E, 205E, 206E, 204F, 205F, 206F may allow three rotational degrees of freedom. Furthermore, for such variants orientational requirements relate to the normal of each plane defined by the first and second link 204A, 205A, 206A, 204D, 205D, 206D of each link assembly 204, 205, 206, i.e. each normal of the link assemblies 204, 205, 206 has a different orientation and at most two of these normals are co-planar. Preferably, the manipulator 200 is configured such that for all operating positions of the manipulator stage 207 this condition is met.

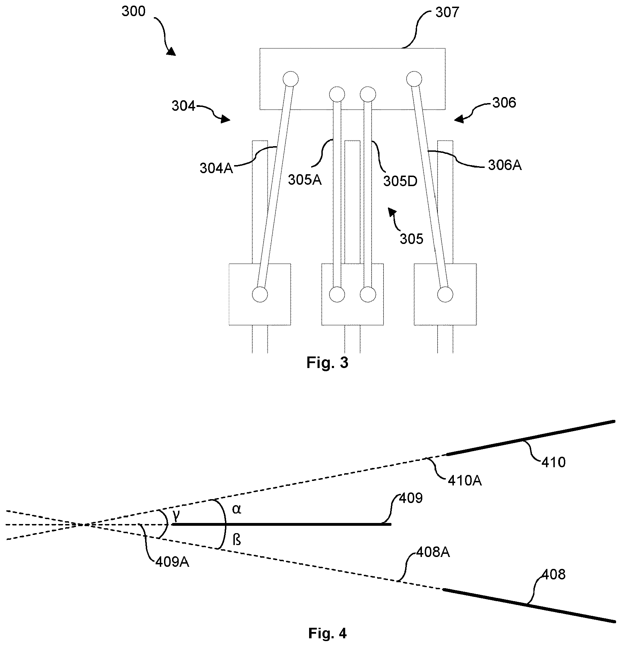

Referring to Fig. 3, a manipulator 300 outside the scope of the claimed invention may also comprise any mixture of link assembly configurations as described before and shown in Fig. 1 and 2. For instance the outer link assemblies 304 and 306 may comprise only a first link 304A, 306A, while the centre link assembly 305 comprises a first link 305A and a second link 305D. The link assemblies 304, 306 limited to a single link 304A, 306A may comprise first and second joints configured for limiting or preventing the rotation of the respective first link 104A, 106A about its longitudinal axis, while the link assembly 305 comprising the second link 305D comprises first and second joints providing three rotational degrees of freedom. Furthermore, the longitudinal axes of first links 304A, 306A of link assemblies 304, 306 limited to a single link and the normal of each link assembly 305 comprising a second link 305D all have a different orientation and at most two of these are co-planar. Preferably, the manipulator 300 is configured such that for all operating positions of the manipulator stage 307 this condition is met.

The present invention may in principle be achieved using any mixture of link assembly configurations (e.g. the principal ones shown in Fig. 1 and 2). Such a manipulator may comprise two outer link assemblies comprising a second link and one centre link assembly limited to a single link.

Referring to Fig. 4, the prismatic joints are configured for moving the first endpoints along trajectories 408, 409, 410, preferably linear trajectories. These trajectories can be arranged essentially in parallel such as shown in Fig. 1, Fig. 2 and Fig 3. Alternatively, at most two trajectories are arranged co-planar. Such an arrangement may aid in moving the manipulator stage vertically. Alternatively or additionally, all trajectories are nonparallel and optionally are all co-planar, such that each angle α, β, γ between projections 408A, 409A, 410A of extrapolations of these trajectories on a horizontal plane is less than 90 degrees, preferably less than 60 degrees and even more preferably less than 30 degrees.

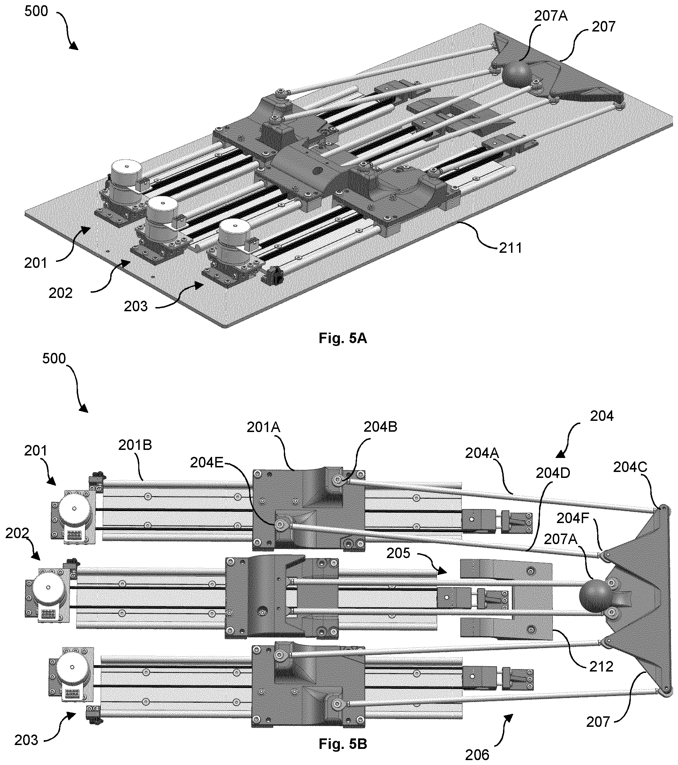

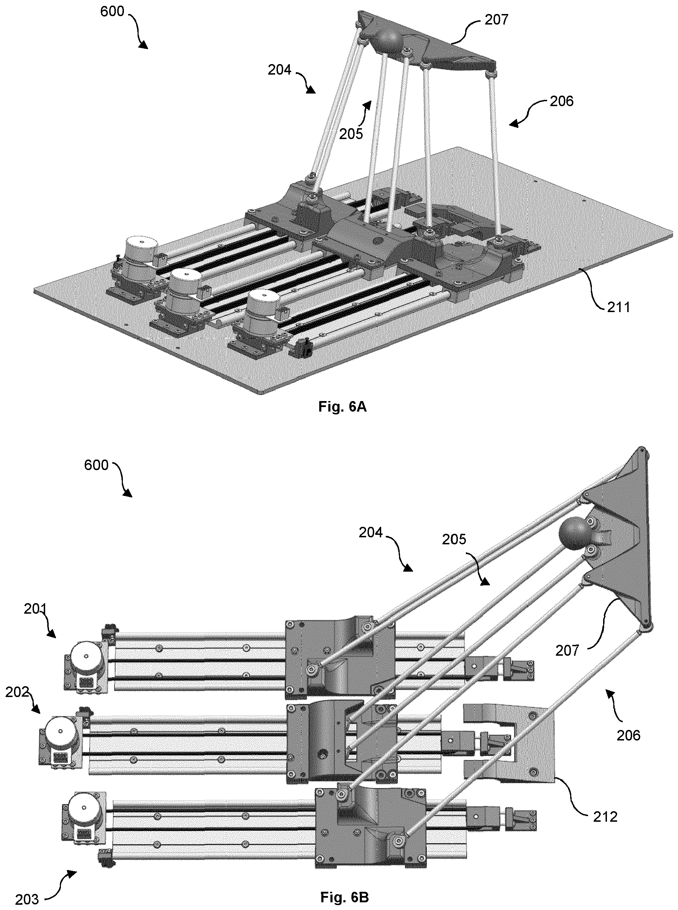

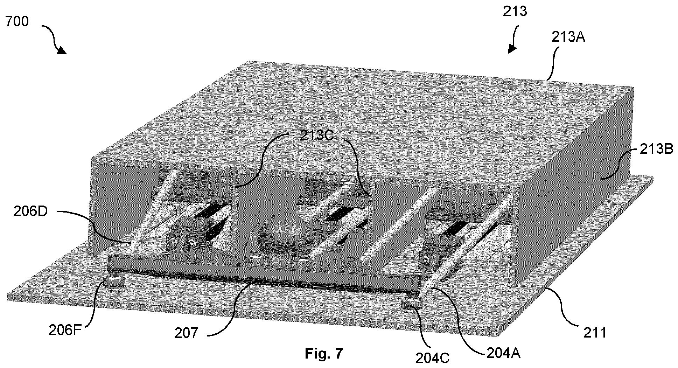

Referring to Fig. 5, 6 and 7, the manipulator 200, 500, 600, 700 is configured such that for all operating positions of the manipulator stage 207 the orientational requirements relating to the normal of each plane defined by the first and second link 204A, 205A, 206A, 204D, 205D, 206D of each link assembly 204, 205, 206 are met or in other words for all operating positions each of these normals of the link assemblies 204, 205, 206 have a different orientation and at most two of these normals are co-planar. For instance, for a manipulator 500, 600, 700 in a parked state as in Fig. 5 and 7, the manipulator stage 207 is positioned nearest to the stationary part of the centre prismatic joint 202 and the centre link assembly 205 is aligned with that stationary part, the normal of the outer link assemblies 204, 206 are configured co-planar, having substantially a same angle with respect to the horizontal plane, but have a different orientation with respect to one another. The normal of these link assemblies radiate outward with respect to a plane of symmetry A of the manipulator 207. For instance, in manipulator 500, 600 this is achieved by arranging the first endpoints 204E and 204B of the first 204A and second 204D link of each outer link assembly 204, 206 at a different heights with respect to the support 211 and placing the respective second endpoints 204C, 204F at corresponding heights on the manipulator stage 207.
Furthermore, the normal of the centre link assembly 205 has a different angle with respect to the horizontal plane (e.g. support 211) than the outer link assemblies 204, 206. For instance, the normal of the centre link assembly 205 lies in the plane of symmetry A.

The manipulator 500, 600, 700 may further comprise a push member 212, such as a ramp located in extension of the centre prismatic joint 202 and configured for elevating the manipulator stage 207, for instance away from the support 211. This may aid in initially raising the manipulator stage 207 from a height corresponding to a parked state of the manipulator stage 207.

The manipulator stage 207 of the manipulator 500, 600, 700 may comprise a part (e.g. a ball part) 207A of a ball joint configured for engaging another part (e.g. a socket part) of a ball joint provided on an energy transfer unit, such that it allows rotational freedom for aligning the energy transfer unit provided on the manipulator with another energy transfer unit provided on the vehicle.

The manipulator 700 may further comprise a cover 213. The cover 213 may be arranged for covering at least part of the link assemblies 204, 205, 206 in a parked state of the manipulator, while being configured for exposing the link assemblies 204, 205, 206 (at least to a larger extent than in the parked state). This may be achieved moving the link assemblies 204, 205, 206 using the prismatic joins 201, 202, 203. Alternatively or additionally, this may be achieved by moving the cover 213, for instance by sliding the cover 213 along the support 211. The cover 213 has a top surface 213A and sidewalls 213B for shielding components of the manipulator from external factors such as water and debris. The cover may also comprise ribs 213C to provide additional support for the top surface, for instance such that the cover 213 is lighter and/or can withstand the forces exerted on it in case a wheel of a vehicle drives over it.

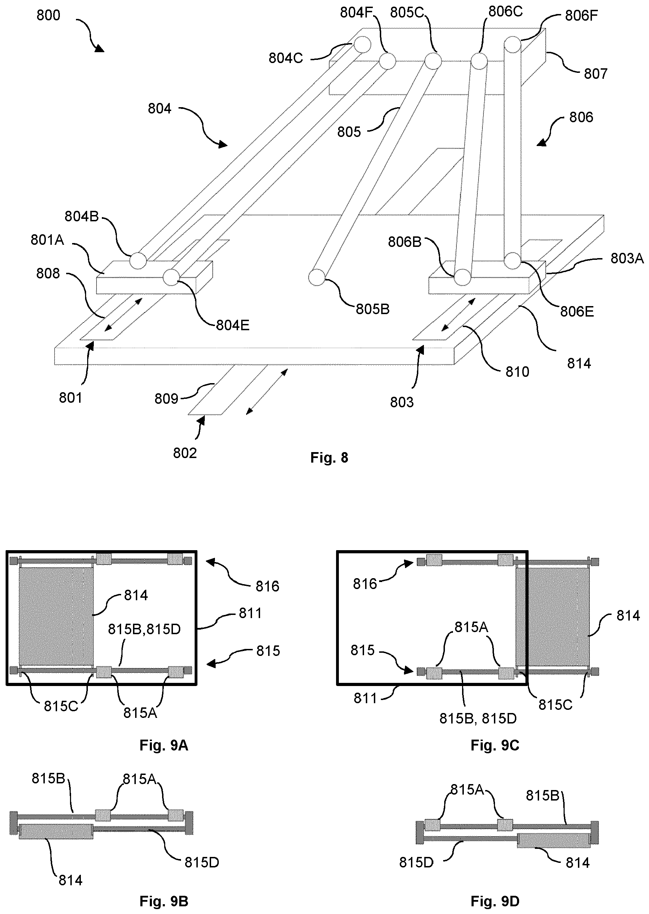

Referring to Fig. 8, a manipulator 800 according to the invention may additionally comprise a platform 814 movable along the second trajectory 809 (e.g. the center trajectory with respect to the first and third trajectory 808, 810), wherein the first endpoint 805B of the second link assembly 805 may be pivotally attached to the platform 814 and wherein the second endpoint 805C of the second link assembly 805 may be pivotally connected to the manipulator stage 807. The first and the third trajectory 808, 810 (e.g. the outer trajectories with respect to the second trajectory) may be arranged on such platform 814 for moving the first ends 804B, 804E, 806B, 806E of the respective link assemblies 804, 806 relative to the platform 814.

Such an embodiment allows to move the stage 807 in a direction along the second trajectory 809 using the second prismatic joint 802, without the need for operating the first or the third prismatic joint 801, 803. The second prismatic joint 802 may therefore be configured to have a relative long stroke compared to the first or third prismatic joint 801, 803. The first and the third prismatic joints 801, 803 are used for moving the stage 807 in a direction having three orthogonal directional components and may be configured to position the stage 807 at various positions within a limited volume, typically having a range in directions orthogonal with respect to the second trajectory 809 larger than another range in directions substantially parallel to the second trajectory 809. In the shown embodiment the second link assembly 805 is limited to a single link 805A and the outer link assemblies 804, 806 comprise both a first 804A, 806A and a second link 804D, 806D, however as previously described any combination of species of link assemblies may be used.

Referring to Fig. 9A-D, a manipulator as shown in Fig. 8 preferably comprises a second prismatic joint comprising at least one telescopic linear guide 815 essentially in parallel to the second trajectory and configured for guiding the platform 814 along the second trajectory, for instance when it is moved beyond a support 811. In a preferred embodiment the platform is guided by a set of telescopic linear guides 815, 816 advantageously connected to opposing edges of the platform 814. Preferably, the telescopic linear guides 815, 816 each comprise at least one, preferably two first linear slide bearings 815A configured for being connected to the support 811 and a first rod-like member 815B connected to the first linear slide bearing 815A and configured for sliding along the first linear slide bearings 815A. Furthermore, it may comprise a second rod-like member 815D fixedly connected to the first rod-like member 815B and arranged in parallel to the first rod-like member 815B. The second rod-like member 815D may be connected to the platform 814 through at least one, preferably two second linear slide bearings 815C configured for sliding along the second rod like member 815D.

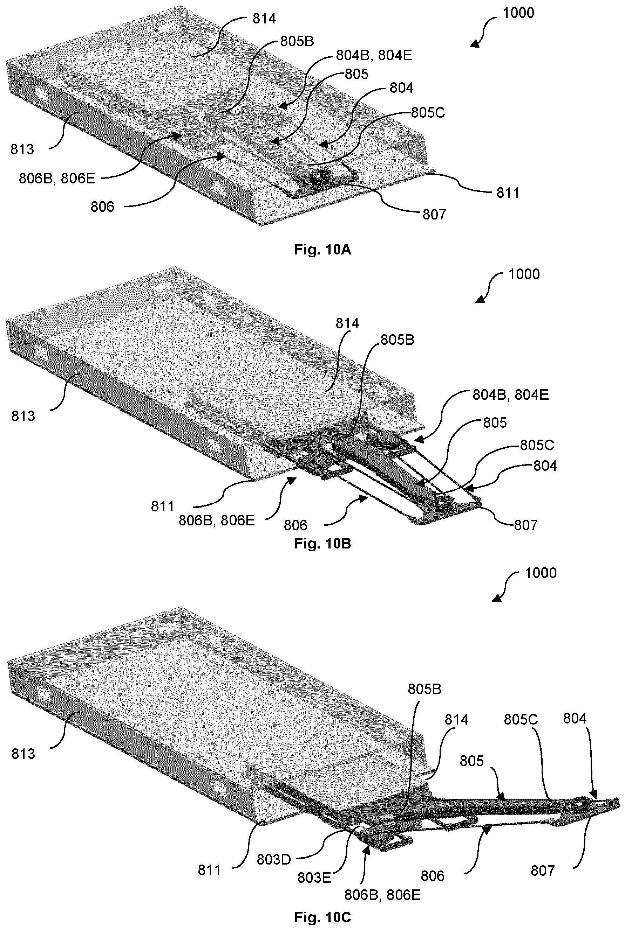

Referring to Fig. 10A-C, a manipulator 1000 comprises a platform 814 and a first cover 813 configured for accommodating the platform 814. The platform 814 is configured to slide along the second trajectory into and out of the first cover 813. In a retracted state as shown in Fig. 10A, the platform may reside inside the first cover 813. The first cover 813 comprises a cover to protect the platform from debris in the retracted state. In an extended state as shown in Fig. 10B and 10C, the platform may be moved such that the link assemblies 804, 805, 806 reside outside of the first cover 813, and such that the manipulator stage 807 can be moved away from the support 811, in directions perpendicular to the second trajectory for mating the energy transfer unit with its counterpart for instance provided on a vehicle.

In the retracted state, as shown in Fig 10A, the platform 814 of the manipulator 1000 is typically moved to an end of the manipulator 1000 such that the first endpoint of the first link assembly is located at an endpoint of the first trajectory. To reduce the building height of the manipulator 1000 in the retracted state, the first endpoints of the first and third link assemblies 804, 806 may be positioned such that the manipulator stage 807 is in close proximity to a support 811 of the manipulator (e.g. a ground surface, a vehicle underbody). In the shown embodiment this corresponds to the second link assembly 805 being substantially aligned to the second trajectory. As shown, the first endpoint 805B of the second link assembly 805 in such state may be located further from the support 811 than the second endpoint 805C of the second link assembly 805, to facilitate initial movement away from the support 811. The first endpoint 805B of the second link assembly 805 in such state may be located further from the support 811 than the first endpoints 804B, 804E, 806B, 806E of the first and third link assembly 804, 806, to facilitate initial movement away from the support 811.

In an extended state, as shown in Fig. 10B and 10C, the first endpoint 805B of the second link assembly 805 and the platform 814 have been moved along the second trajectory away from the endpoint of the second trajectory corresponding to the retracted state (as shown in Fig. 10A) towards a location wherein the energy transfer unit can be mated typically using the first and third prismatic joint to move the first endpoints 804B, 804E, 806B, 806E of the first and third link assembly 804,806, respectively. Preferably, the platform 814 is connected to the support 811 through at least one, preferably two telescopic linear guides as shown in Fig. 9A-D.

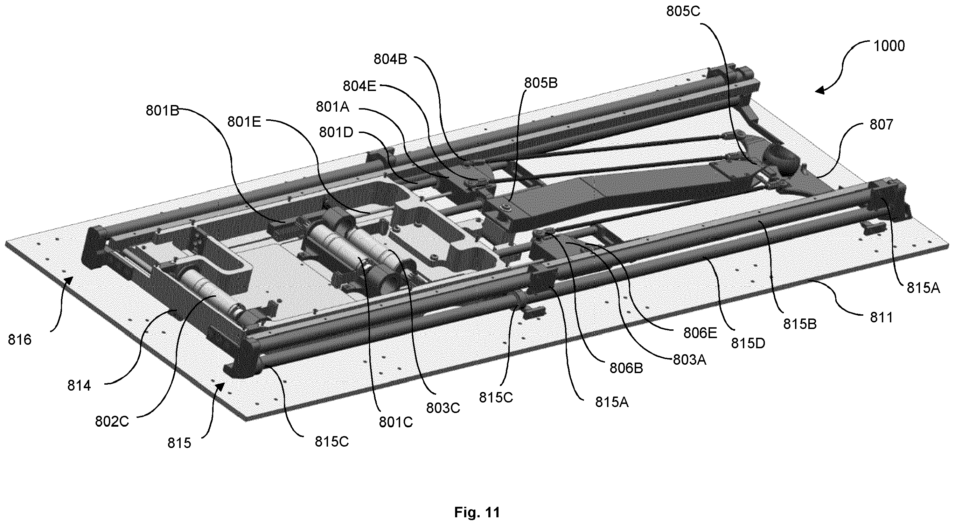

Referring to Fig. 11, the first and the third prismatic joints (including the motors 801C, 803C) of the manipulator 1000 may be arranged on the platform 814. Optionally, the motor 802C of the second prismatic joint may be arranged on the platform. Arranging the motors 801C, 802C, 803C of the first, the second and the third prismatic joint on the platform 814 has the benefit that it simplifies powering and shielding such powered components.

In the shown embodiment, the prismatic joints each comprise a rotary motor 801C, 802C, 803C arranged on (e.g. fixedly connected to) the platform 814 and connected to a rack and pinion assembly. The rack of the first 801B and the rack of the third prismatic joints may be connected to the first endpoints 804B, 804E, 806B, 806E of the corresponding link assemblies and configured for moving with respect to the platform 814. The rack (not shown) of the second prismatic joint may be connected to the support 811 and the rack and pinion arrangement of the second prismatic joint may be configured for moving the platform 814 relative to the support 811.

Preferably, the rack of the first 801B and the rack of the third prismatic joint may each be fixedly connected to the first endpoints 804B, 804E, 806B, 806E of the respective link assemblies via a rod-like extension 801E, 803E of the corresponding connecting member 801A, 803A. Such connecting members 801A, 803A may for instance be further connected to at least one, preferably two linear guides 801D, 803D of the corresponding prismatic joint arranged on the platform 814, wherein the connecting members 801A, 803A are configured to slide along the at least one, preferably two linear guides 801D, 803D. Preferably, the second prismatic joint comprises at least one, preferably two telescopic linear guides 815, for instance as shown in Fig.9A-D, for moveably connecting the platform 814 to the support.

## Claims

1. Manipulator (800) for handsfree charging electric vehicles, comprising
a first (801), a second (802) and a third prismatic joint (803),
a manipulator stage (807), and
a first (804), a second (805) and a third link (806) assembly,
wherein the first, the second and the third link assembly each comprise
a first link comprising
a first endpoint (804B, 805B, 806B) comprising a first joint configured for pivotally connecting the first link to the first, the second and the third prismatic joint, respectively, and
a second endpoint (804C, 805C, 806C) comprising a second joint
configured for pivotally connecting the first link to the manipulator stage, and
wherein the first, the second and the third link assemblies are configured for preventing at least two, preferably three rotational degrees of freedom of the manipulator stage,
wherein the first, the second and the third prismatic joint are configured for moving the corresponding first endpoints of the first links along a first (808), a second (809) and a third trajectory (810),
wherein at least two of the first, second and third trajectory define a first plane and wherein projections of each one of the first, the second and the third trajectory on the first plane have with respect to projections of each other one of the first, the second and the third trajectory on the first plane one of a list of: an acute angle (α, β, γ) of less than 60 degrees, preferably less than 30 degrees, more preferably less than 10 degrees and even more preferably less than 5 degrees and no angle,
**characterised in that** the manipulator further comprises a support (811), wherein the first, the second and the third prismatic joints are stacked such that they do not all move independently and such that the second prismatic joint (802)
is connected to the support (811) and the first (801) and the third (803) prismatic joint are connected to the support (811) via the second prismatic joint (802).

2. Manipulator according to claim 1, further comprising a platform (814) wherein the second prismatic joint connects the platform to the support and is configured for moving the platform relative to the support, and wherein the first and the third prismatic joints are arranged on the platform, preferably wherein the first endpoint of the second link assembly is pivotally attached to the platform, preferably wherein each one of the first, the second and the third prismatic joints comprises a motor, such as an electric motor, arranged on the platform.

3. Manipulator according to claim 2, wherein the second prismatic joint further comprises at least one, preferably two telescopic linear guides (815, 816) for connecting the platform to the support, wherein the at least one telescopic linear guide has a stroke substantially parallel to the second trajectory.

4. Manipulator according to any one of the previous claims, further comprising a first cover (813) arranged for covering at least a part of the first and the third link assemblies up to the manipulator stage, wherein the first cover is arranged for sliding away from the manipulator stage in a direction corresponding to a directional component of the first and third trajectory, preferably the first cover is arranged for covering at least a part of the first, the second and the third link assemblies up to the manipulator stage, wherein the first cover is arranged for sliding away from the manipulator stage in a direction corresponding to a directional component of the first and third trajectory.

5. Manipulator according to claim 3 in conjunction with claim 4, wherein the at least one telescopic linear guide is configured for guiding the platform between a first state, wherein the platform is completely received within the first cover, and a second state, wherein the platform at least in part extends from a side of the first cover, preferably the first cover is fixedly connected to the support.

6. Manipulator according to any one of the previous claims, wherein the second link assembly is free from a second link, preferably the first link of the second link assembly is configured for providing a conduit for guiding a power cable towards the stage, preferably the first and the third link assembly comprise a second link.

7. Manipulator according to any of the previous claims, wherein at least one and preferably each one of the first, the second and the third link assemblies comprises a second link, comprising a first endpoint (804E, 806E) comprising a first joint configured for pivotally connecting the at least one link to the first, the second and the third prismatic joint, respectively, and a second endpoint (804F, 806F) comprising a second joint configured for pivotally connecting the at least one link to the manipulator stage and wherein each of the link assemblies comprising a second link define a parallelogram.

8. Manipulator according to any of the previous claims, wherein any one of the first, the second and the third link assemblies comprising the second link defines a second plane, which second plane comprises an axis perpendicular to the second plane, wherein any other one of the first, the second and the third link assemblies comprise an axis parallel to a longitudinal axis of the first link, and wherein at most two of the axes are configured to be co-planar, wherein the at most two of the axes are non-parallel.

9. Manipulator according to any one of the previous claims, wherein the manipulator stage comprises a plurality of connecting means arranged for connecting the second joint, wherein each connecting means of the plurality of connecting means individually connects one of the second joints, preferably wherein the connecting means of the plurality of connecting means are spaced apart along a direction having a directional component parallel to the first plane and orthogonal to the second trajectory.

10. Manipulator according to any one of the previous claims, wherein at least two and preferably each of the first, the second and the third link assemblies are configured for limiting and optionally preventing a rotation of at least two first links about their longitudinal axis defined by the corresponding first and second endpoint.

11. Manipulator according to any one of the previous claims, wherein one and preferably two of the first joint and the second joint of at least one and preferably each one of the first, the second and the third link assemblies are configured for allowing at most two rotational degrees of freedom.

12. Manipulator according to any one of the previous claims, wherein the first endpoint of the second link assembly is arranged away from the first plane.

13. Manipulator according to any one of the previous claims, further comprising a stationary push member configured for engaging at least one of the list comprising the first link assembly, the second link assembly, the third link assembly and the manipulator stage, such that the manipulator stage is moved away from the first plane, preferably the stationary push member is arranged at the second endpoint of the second link, even more preferably the stationary push member comprises a ramp, comprising an inclined surface in extension of the second trajectory.

14. Manipulator according to any one of the previous claims, further comprising a housing for housing electronic components and located on one side of the manipulator in extension of each of the trajectories.

15. Manipulator according to any one of the previous claims, further comprising and energy transfer unit connected to the manipulator stage, preferably the energy transfer unit is pivotally connected to the manipulator stage.

## Patentansprüche

1. Manipulator (800) zum freihändigen Laden von Elektrofahrzeugen, umfassend
ein erstes (801), ein zweites (802) und ein drittes prismatisches Gelenk (803),
eine Manipulatorstufe (807), und
eine erste (804), eine zweite (805) und eine dritte Verbindungsanordnung (806),
wobei die erste, die zweite und die dritte Verbindungsanordnung jeweils umfassen
eine erste Verbindung, umfassend
einen ersten Endpunkt (804B, 805B, 806B), umfassend ein erstes Gelenk, das so konfiguriert ist, dass es die erste Verbindung schwenkbar mit dem ersten, dem zweiten bzw. dem dritten prismatischen Gelenk verbindet, und
einen zweiten Endpunkt (804C, 805C, 806C), der ein zweites Gelenk umfasst, das so konfiguriert ist, dass es die erste Verbindung schwenkbar mit der Manipulatorstufe verbindet, und
wobei die erste, die zweite und die dritte Verbindungsanordnung so konfiguriert sind, dass sie mindestens zwei, vorzugsweise drei rotatorische Freiheitsgrade der Manipulatorstufe verhindern, wobei das erste, das zweite und das dritte prismatische Gelenk so konfiguriert sind, dass sie die entsprechenden ersten Endpunkte der ersten Verbindungen entlang einer ersten (808), einer zweiten (809) und einer dritten Trajektorie (810) bewegen,
wobei mindestens zwei der ersten, zweiten und dritten Trajektorie eine erste Ebene definieren und wobei Projektionen jeder der ersten, zweiten und dritten Trajektorie auf die erste Ebene in Bezug auf Projektionen jeder anderen der ersten, zweiten und dritten Trajektorie auf die erste Ebene eine der folgenden aufweisen: einen spitzen Winkel (α, β, γ) von weniger als 60 Grad, vorzugsweise weniger als 30 Grad, noch bevorzugter weniger als 10 Grad und noch bevorzugter weniger als 5 Grad und keinen Winkel,
**dadurch gekennzeichnet, dass** der Manipulator ferner einen Träger (811) umfasst, wobei das erste, das zweite und das dritte prismatische Gelenk so gestapelt sind, dass sie sich nicht alle unabhängig voneinander bewegen, und derart, dass das zweite prismatische Gelenk (802) mit dem Träger (811) verbunden ist und das erste (801) und das dritte (803) prismatische Gelenk über das zweite prismatische Gelenk (802) mit dem Träger (811) verbunden sind.

2. Manipulator nach Anspruch 1, ferner umfassend eine Plattform (814), wobei das zweite prismatische Gelenk die Plattform mit dem Träger verbindet und so konfiguriert ist, dass es die Plattform relativ zu dem Träger bewegt, und wobei das erste und das dritte prismatische Gelenk auf der Plattform angeordnet sind, vorzugsweise wobei der erste Endpunkt der zweiten Verbindungsanordnung schwenkbar an der Plattform befestigt ist, vorzugsweise wobei jedes der ersten, zweiten und dritten prismatischen Gelenke einen Motor, wie einen Elektromotor, umfasst, der auf der Plattform angeordnet ist.

3. Manipulator nach Anspruch 2, wobei das zweite prismatische Gelenk ferner mindestens eine, vorzugsweise zwei teleskopische Linearführungen (815, 816) zum Verbinden der Plattform mit dem Träger aufweist, wobei die mindestens eine teleskopische Linearführung einen Hub aufweist, der im Wesentlichen parallel zur zweiten Trajektorie verläuft.

4. Manipulator nach einem der vorhergehenden Ansprüche, ferner umfassend eine erste Abdeckung (813), die so angeordnet ist, dass sie mindestens einen Teil der ersten und der dritten Verbindungsanordnung bis zu der Manipulatorstufe abdeckt, wobei die erste Abdeckung so angeordnet ist, dass sie von der Manipulatorstufe in einer Richtung weggleitet, die einer Richtungskomponente der ersten und dritten Trajektorie entspricht, vorzugsweise ist die erste Abdeckung so angeordnet, dass sie mindestens einen Teil der ersten, der zweiten und der dritten Verbindungsanordnung bis zu der Manipulatorstufe abdeckt, wobei die erste Abdeckung so angeordnet ist, dass sie von der Manipulatorstufe in einer Richtung weggleitet, die einer Richtungskomponente der ersten und der dritten Trajektorie entspricht.

5. Manipulator nach Anspruch 3 in Verbindung mit Anspruch 4, wobei die mindestens eine teleskopische Linearführung zum Führen der Plattform zwischen einem ersten Zustand, in dem die Plattform vollständig in der ersten Abdeckung aufgenommen ist, und einem zweiten Zustand, in dem die Plattform mindestens teilweise aus einer Seite der ersten Abdeckung herausragt, konfiguriert ist, wobei vorzugsweise die erste Abdeckung fest mit dem Träger verbunden ist.

6. Manipulator nach einem der vorhergehenden Ansprüche, wobei die zweite Verbindungsanordnung frei von einer zweiten Verbindung ist, vorzugsweise die erste Verbindung der zweiten Verbindungsanordnung so konfiguriert ist, dass sie eine Leitung zum Führen eines Stromkabels zu der Stufe bereitstellt, vorzugsweise die erste und die dritte Verbindungsanordnung eine zweite Verbindung umfassen.

7. Manipulator nach einem der vorhergehenden Ansprüche, wobei mindestens eine und vorzugsweise jede der ersten, zweiten und dritten Verbindungsanordnungen eine zweite Verbindung umfasst, die einen ersten Endpunkt (804E, 806E) umfasst, der ein erstes Gelenk umfasst, das zum schwenkbaren Verbinden der mindestens einen Verbindung mit dem ersten, dem zweiten und dem dritten prismatischen Gelenk zu verbinden, und einen zweiten Endpunkt (804F, 806F) umfasst, der ein zweites Gelenk umfasst, das so konfiguriert ist, dass es die mindestens eine Verbindung schwenkbar mit der Manipulatorstufe verbindet, und wobei jede der Verbindungsanordnungen mit einer zweiten Verbindung ein Parallelogramm definiert.

8. Manipulator nach einem der vorhergehenden Ansprüche, wobei eine der ersten, zweiten und dritten Verbindungsanordnungen, die die zweite Verbindung umfasst, eine zweite Ebene definiert, wobei die zweite Ebene eine Achse senkrecht zu der zweiten Ebene umfasst, wobei jede andere der ersten, zweiten und dritten Verbindungsanordnungen eine Achse parallel zu einer Längsachse der ersten Verbindung umfasst, und wobei höchstens zwei der Achsen so konfiguriert sind, dass sie koplanar sind, wobei die höchstens zwei der Achsen nicht parallel sind.

9. Manipulator nach einem der vorhergehenden Ansprüche, wobei die Manipulatorstufe eine Vielzahl von Verbindungsmitteln aufweist, die zum Verbinden des zweiten Gelenks angeordnet ist, wobei jedes Verbindungsmittel der Vielzahl von Verbindungsmitteln individuell eines der zweiten Gelenke verbindet, vorzugsweise wobei die Verbindungsmittel der Vielzahl von Verbindungsmitteln entlang einer Richtung beabstandet sind, die eine Richtungskomponente parallel zu der ersten Ebene und orthogonal zu der zweiten Trajektorie aufweist.

10. Manipulator nach einem der vorhergehenden Ansprüche, wobei mindestens zwei und vorzugsweise jede der ersten, zweiten und dritten Verbindungsanordnungen so konfiguriert sind, dass sie eine Drehung von mindestens zwei ersten Verbindungen um ihre Längsachse, die durch den entsprechenden ersten und zweiten Endpunkt definiert ist, begrenzen und optional verhindern.

11. Manipulator nach einem der vorhergehenden Ansprüche, wobei ein und vorzugsweise zwei der ersten Gelenke und der zweiten Gelenke von mindestens einer und vorzugsweise jeder der ersten, zweiten und dritten Verbindungsanordnungen so konfiguriert sind, dass sie höchstens zwei Rotationsfreiheitsgrade ermöglichen.

12. Manipulator nach einem der vorhergehenden Ansprüche, wobei der erste Endpunkt der zweiten Verbindungsanordnung von der ersten Ebene entfernt angeordnet ist.

13. Manipulator nach einem der vorhergehenden Ansprüche, ferner umfassend ein stationäres Stoßelement, das so konfiguriert ist, dass es mit mindestens einer der die erste Verbindungsanordnung, die zweite Verbindungsanordnung, die dritte Verbindungsanordnung und die Manipulatorstufe umfassenden Liste in Eingriff kommt, sodass die Manipulatorstufe von der ersten Ebene wegbewegt wird, wobei das stationäre Stoßelement vorzugsweise am zweiten Endpunkt der zweiten Verbindungsanordnung angeordnet ist, noch bevorzugter umfasst das stationäre Stoßelement eine Rampe, die eine geneigte Fläche in Verlängerung der zweiten Trajektorie umfasst.

14. Manipulator nach einem der vorhergehenden Ansprüche, ferner umfassend ein Gehäuse zur Aufnahme elektronischer Komponenten, das auf einer Seite des Manipulators in Verlängerung jeder der Trajektorien angeordnet ist.

15. Manipulator nach einem der vorhergehenden Ansprüche, ferner umfassend eine Energieübertragungseinheit, die mit der Manipulatorstufe verbunden ist, vorzugsweise ist die Energieübertragungseinheit schwenkbar mit der Manipulatorstufe verbunden.

## Revendications

1. Manipulateur (800) pour la recharge mains libres des véhicules électriques, comprenant une première (801), une deuxième (802) et une troisième articulation prismatique (803), un étage manipulateur (807), et
un premier (804), un deuxième (805) et un troisième ensemble biellette (806),
dans lequel les premier, deuxième et troisième ensembles biellette comprennent chacun
une première biellette comprenant
un premier point d'extrémité (804B, 805B, 806B) comprenant une première articulation conçue pour relier de manière pivotante la première biellette à la première, à la deuxième et à la troisième articulation prismatique, respectivement, et
un second point d'extrémité (804C, 805C, 806C) comprenant une deuxième articulation conçue pour relier de manière pivotante la première biellette à l'étage manipulateur, et
dans lequel le premier, le deuxième et le troisième ensembles biellette sont conçus pour empêcher au moins deux, de préférence trois degrés de liberté de rotation de l'étage manipulateur, dans lequel la première, la deuxième et la troisième articulation prismatique sont conçues pour déplacer les premiers points d'extrémité correspondants des premières biellettes le long d'une première (808), d'une deuxième (809) et d'une troisième trajectoire (810),
dans lequel au moins deux des première, deuxième et troisième trajectoires définissent un premier plan et dans lequel les projections de chacune parmi la première, la deuxième et la troisième trajectoire sur le premier plan ont par rapport aux projections de chaque autre parmi la première, la deuxième, la troisième trajectoire sur le premier plan un élément dans la liste comprenant : un angle aigu (α, β, γ) inférieur à 60 degrés, de préférence inférieur à 30 degrés, plus préférablement inférieur à 10 degrés et encore plus préférablement inférieur à 5 degrés et aucun angle,
**caractérisé en ce que** le manipulateur comprend en outre un support (811), la première, la deuxième et la troisième articulation prismatique étant empilées de telle sorte qu'elles ne se déplacent pas toutes indépendamment et de telle sorte que la deuxième articulation prismatique (802) soit reliée au support (811) et la première (801) et la troisième (803) articulation prismatique sont reliés au support (811) par l'intermédiaire de la deuxième articulation prismatique (802).

2. Manipulateur selon la revendication 1, comprenant en outre une plateforme (814) dans lequel la deuxième articulation prismatique relie la plateforme au support et est conçue pour déplacer la plateforme par rapport au support, et dans lequel la première et la troisième articulation prismatique sont disposées sur la plateforme, de préférence dans lequel le premier point d'extrémité du deuxième ensemble biellette est fixé de manière pivotante à la plateforme, de préférence dans lequel chacune parmi la première, la deuxième et la troisième articulation prismatique comprennent un moteur, tel qu'un moteur électrique, disposé sur la plateforme.

3. Manipulateur selon la revendication 2, dans lequel la deuxième articulation prismatique comprend en outre au moins un, de préférence deux guides linéaires télescopiques (815, 816) pour relier la plateforme au support, dans lequel le au moins un guide linéaire télescopique a une course sensiblement parallèle à la deuxième trajectoire.

4. Manipulateur selon l'une quelconque des revendications précédentes, comprenant en outre un premier couvercle (813) agencé pour recouvrir au moins une partie du premier et du troisième ensemble biellette jusqu'à l'étage manipulateur, le premier couvercle étant agencé pour coulisser en s'éloignant de l'étage manipulateur dans une direction correspondant à une composante directionnelle des première et troisième trajectoires, de préférence le premier couvercle est agencé pour recouvrir au moins une partie du premier, du deuxième et du troisième ensemble biellette jusqu'à l'étage manipulateur, le premier couvercle étant agencé pour coulisser en s'éloignant de l'étage manipulateur dans une direction correspondant à une composante directionnelle des première et troisième trajectoires.

5. Manipulateur selon la revendication 3 en conjonction avec la revendication 4, dans lequel le au moins un guide linéaire télescopique est conçu pour guider la plateforme entre un premier état, où la plateforme étant complètement reçue à l'intérieur du premier couvercle, et un second état, où la plateforme s'étend au moins en partie depuis un côté du premier couvercle, de préférence le premier couvercle est relié à demeure au support.

6. Manipulateur selon l'une quelconque des revendications précédentes, dans lequel le deuxième ensemble biellette est exempt d'une seconde biellette, de préférence la première biellette du deuxième ensemble biellette est conçue pour fournir un conduit servant à guider un câble d'alimentation en direction de l'étage, de préférence le premier et le troisième ensemble biellette comprennent un seconde biellette.

7. Manipulateur selon l'une quelconque des revendications précédentes, dans lequel au moins un et de préférence chacun parmi le premier, le deuxième et le troisième ensemble biellette comprennent une seconde biellette, comprenant un premier point d'extrémité (804E, 806E) comprenant une première articulation conçue pour relier de manière pivotante la au moins une biellette à la première, à la deuxième et à la troisième articulation prismatique, respectivement, et un second point d'extrémité (804F, 806F) comprenant une deuxième articulation conçue pour relier de manière pivotante la au moins une biellette à l'étage manipulateur et dans lequel chacun des ensembles biellette comprenant une seconde biellette définit un parallélogramme.

8. Manipulateur selon l'une quelconque des revendications précédentes, dans lequel l'un quelconque du premier, du deuxième et du troisième ensemble biellette comprenant la seconde biellette définit un second plan, lequel second plan comprend un axe perpendiculaire au second plan, dans lequel l'un quelconque autre du premier, du deuxième et du troisième ensemble biellette comprend un axe parallèle à un axe longitudinal de la première biellette, et dans lequel deux des axes au plus sont conçus pour être coplanaires, dans lequel les deux des axes au plus ne sont pas parallèles.

9. Manipulateur selon l'une quelconque des revendications précédentes, dans lequel l'étage manipulateur comprend une pluralité de moyens de liaison agencés pour relier la deuxième articulation, dans lequel chaque moyen de liaison de la pluralité de moyens de liaison relie individuellement une des deuxièmes articulations, de préférence dans lequel les moyens de liaison de la pluralité de moyens de liaison sont espacés le long d'une direction ayant une composante directionnelle parallèle au premier plan et orthogonale à la deuxième trajectoire.

10. Manipulateur selon l'une quelconque des revendications précédentes, dans lequel au moins deux et de préférence chacun du premier, du deuxième et du troisième ensemble biellette sont conçus pour limiter et éventuellement empêcher une rotation d'au moins deux premières biellettes autour de leur axe longitudinal défini par les premier et deuxième points d'extrémité correspondants.

11. Manipulateur selon l'une quelconque des revendications précédentes, dans lequel une et de préférence deux parmi la première articulation et la deuxième articulation d'au moins un et de préférence chacun du premier, du deuxième et du troisième ensemble biellette sont conçues pour permettre deux degrés de liberté de rotation au plus.

12. Manipulateur selon l'une quelconque des revendications précédentes, dans lequel le premier point d'extrémité du deuxième ensemble biellette est disposé à l'écart du premier plan.

13. Manipulateur selon l'une quelconque des revendications précédentes, comprenant en outre un élément poussoir fixe conçu pour mettre en prise au moins un élément dans la liste comprenant le premier ensemble biellette, le deuxième ensemble biellette, le troisième ensemble biellette et l'étage manipulateur, de telle sorte que l'étage manipulateur soit éloigné du premier plan, de préférence l'élément poussoir fixe soit disposé au deuxième point d'extrémité de la deuxième biellette, de préférence encore l'élément poussoir fixe comprend une rampe, comprenant une surface inclinée en prolongement de la deuxième trajectoire.

14. Manipulateur selon l'une quelconque des revendications précédentes, comprenant en outre un boîtier pour loger des composants électroniques et situé d'un côté du manipulateur en prolongement de chacune des trajectoires.

15. Manipulateur selon l'une quelconque des revendications précédentes, comprenant en outre une unité de transfert d'énergie reliée à l'étage manipulateur, de préférence l'unité de transfert d'énergie est reliée de manière pivotante à l'étage manipulateur.
